# FASCICULE DE BREVET EUROPEEN

(11) **EP 1 938 409 B1**
(45) Date de publication et mention de la délivrance du brevet: **17.03.2010**
(21) Numéro de dépôt: 06807346.9
(22) Date de dépôt: 17.10.2006
(51) Int. Cl.: H01M 8/02, H01M 8/24, C25B 9/18

(54) **MODULE TUBULAIRE DE PILE A COMBUSTIBLE ET SON DISPOSITIF POUR JOINT D'ETANCHEITE**
RÖHRENFÖRMIGES BRENNSTOFFZELLENMODUL UND DICHTEINRICHTUNG DAFÜR
TUBULAR FUEL CELL MODULE AND THE SEALING DEVICE THEREOF

(30) Priorité: 19.10.2005 FR 0553180
(43) Date de publication de la demande: 02.07.2008
(73) Titulaire: COMMISSARIAT A L'ENERGIE ATOMIQUE, 75015 Paris (FR)
(72) Inventeur: SARRO, Jean-Luc, F-07700 Bourg Saint-andeol (FR)
(74) Mandataire: Ilgart, Jean-Christophe
(86) Numéro de dépôt international: PCT/EP2006/067500
(87) Numéro de publication internationale: WO 2007/045652

(56) Documents cités:
- WO-A-96/04690
- US-A- 5 399 442
- US-B1- 6 291 089
- US-B1- 6 670 068

## Description

### DOMAINE TECHNIQUE

L'invention concerne les piles à combustible et en particulier, celles fonctionnant à haute température comme les piles à combustible SOFC (« Solid Oxide Fuel Cell ») mais également des électrolyseurs du type SOEC (« Solid Oxide Electrolysis Cell »).

### ART ANTERIEUR ET PROBLEME POSE

Les piles à combustible du type SOFC fonctionnent avec de l'oxygène et de l'hydrogène en guise de combustibles, ou avec un autre gaz combustible, par exemple du type du méthane, et à des températures comprises entre 500 et 1 000°C. Ces piles sont constituées d'un empilement de plusieurs cellules élémentaires reliées par des éléments de connexion tels que des interconnecteurs ou des plaques bipolaires. Chaque cellule élémentaire est elle-même constituée d'un empilement d'une cathode, d'un électrolyte et d'une anode. La température élevée est nécessaire pour obtenir une conductivité suffisante de l'électrolyte en ions O₂.

Dans l'architecture coaxiale, l'empilement des différentes cellules élémentaires de piles à combustible est concentrique, chaque cellule élémentaire elle-même étant reliée à l'autre par un interconnecteur, comme par example décrit dans WO 96/04690.

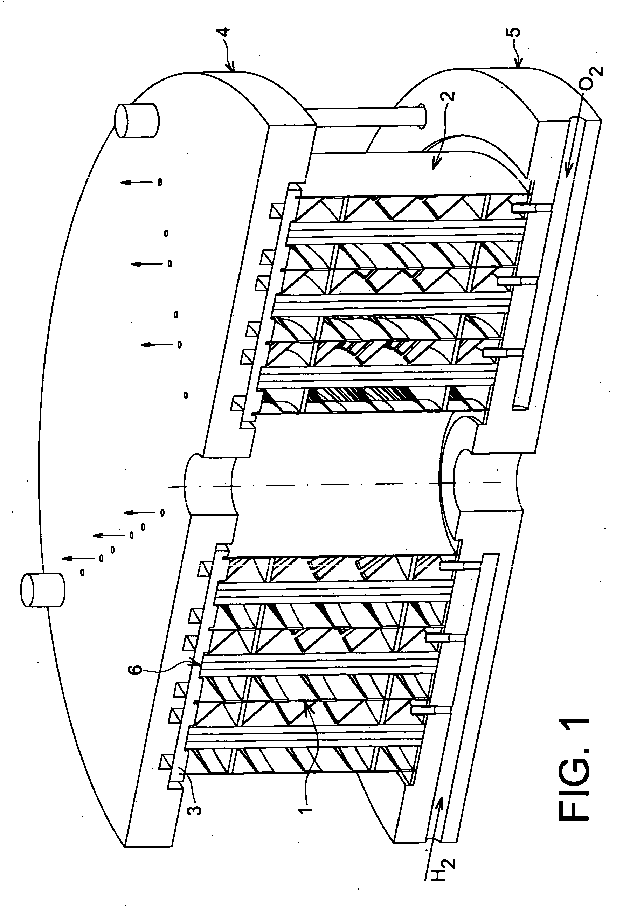

La figure 1 représente un type de structure tubulaire comprenant principalement un empilement concentrique 2 de plusieurs cellules élémentaires 6 de piles à combustible intercalées avec des interconnecteurs 1. A chaque extrémité de l'empilement se trouve une bride 4 ou 5 possédant, soit un réseau de distribution d'oxygène et d'hydrogène comme la bride inférieure de base 5, soit un réseau de collectage des gaz résiduels comme la bride supérieure 4. En outre, on utilise, entre la partie supérieure de l'empilement 2 et la bride supérieure 4, un joint 3 constitué d'un disque de laine céramique compressé entre ces deux éléments. Il crée ainsi une perte de charge entre les différentes chambres du circuit des gaz combustibles et a aussi pour fonction d'absorber les différences de dilatation entre les différents éléments constitutifs de l'empilement, notamment les cellules et les interconnecteurs, ces derniers étant métalliques.

Toutefois, il s'avère que ce joint n'assure pas une étanchéité parfaite. En effet, une fraction des gaz se mélange et brûle. Cette imperfection peut tout de même être utilisée afin de réchauffer les gaz rentrant, si nécessaire. En revanche, cet apport de chaleur peut s'avérer superflu dans certaines conditions de fonctionnement. Cette fuite en sortie de l'appareil devient alors un défaut préjudiciable au rendement du module de pile à combustible.

Le but de l'invention est dé remédier à ces inconvénients afin de récupérer les gaz valorisables en sortie d'appareil et donc d'améliorer son rendement. Pour les piles à combustible SOFC, les gaz en présence sont l'hydrogène non consommé en sortie de chambre anodique et l'oxygène en sortie de chambre cathodique, et les électrolyseurs du type SOEC les gaz en présence sont l'hydrogène produit en sortie de chambre cathodique et l'oxygène plus un gaz vecteur en sortie de chambre anodique.

Elle a également pour but dans le cadre des piles à combustibles SOFC, comme dans celui des électrolyseur du type SOEC, de diminuer le risque de ruine engendré par une combustion incontrôlé due au mélange des deux gaz et aussi d'absorber la différence de dilation des différents composants.

### RESUME DE L'INVENTION

A cet effet, l'objet principal de l'invention est un module de piles à combustible composé d'un empilement tubulaire de cellules élémentaires intercalées avec des interconnecteurs et comprenant pour chaque étage relatif à une cellule :
- un interconnecteur ;
- une chambre anodique ;
- une cellule élémentaire ;
- une chambre cathodique,
le module se complétant de deux boîtiers de distribution et de collectage aux deux extrémités de l'empilement dont un boîtier supérieur et un boîtier inférieur et d'un dispositif d'étanchéité constituée d'un joint supérieur entre l'empilement et le boîtier supérieur. On signale que le verre à la température de fonctionnement se trouve à l'état pâteux. Les formes tubulaires du boîtier supérieur sont "immergées" dans le verre mais ne le compriment pas.

Selon l'invention, le dispositif d'étanchéité se complète d'une surface inférieure du boîtier supérieur qui possède des parois tubulaires concentriques, à savoir deux pour chaque étage relatif à une cellule, qui sont plongés dans le joint supérieur, les chambres anodiques et cathodiques étant terminées par des réservoirs constitués chacun par une virole interne tubulaire et une virole externe tubulaire contenant le joint supérieur et débouchant par couple à l'intérieur d'une cavité du boîtier qui est supérieur.

Dans une réalisation préférentielle de l'invention, le joint est en verre.

De même, dans une réalisation principale de l'invention la structure tubulaire du module est cylindrique.

Dans une première version du module selon l'invention, le boîtier inférieur est un boîtier de distribution, un joint inférieur étant placé entre la base de l'empilement et la surface supérieure du boîtier inférieur, et le boîtier supérieur est un boîtier de collectage des gaz.

Dans ce cas, les moyens de distribution du boîtier de distribution sont constitués d'au moins deux canaux annulaires débouchant dans au moins deux canaux radiaux par l'intermédiaire de passages et débouchant eux-mêmes sur une face de l'empilement par l'intermédiaire de passages de distribution destinés à alimenter les électrodes par les chambres anodiques et cathodiques.

Dans ce cas, les moyens de collectage du boîtier de collectage sont constitués par au moins deux canaux radiaux débouchant sur la surface en regard de l'empilement par des passages de collectage et débouchant sur une surface externe par l'intermédiaire de canaux annulaires, pour la sortie des gaz résiduels.

Dans la deuxième version du module selon l'invention, les boîtiers inférieur et supérieur sont chacun effectif pour la distribution et le collectage pour un des deux gaz combustibles.

Dans ce deuxième cas, les moyens de distribution des deux boîtiers sont constitués, pour chaque boîtier, d'au moins un canal radial débouchant sur une face de l'empilement par l'intermédiaire d'orifices de distribution destinés à alimenter les électrodes par les chambres anodiques et cathodiques.

De même, dans ce cas, les moyens de collectage des deux boîtiers sont constitués par au moins un canal annulaire sur la surface en regard de l'empilement et des orifices de sortie sur une surface externe et débouchant dans le canal annulaire pour la sortie des gaz résiduels.

Il est avantageux d'utiliser un tube de support au centre de l'empilement assurant le centrage ainsi que le support du boîtier supérieur.

### BRÈVE DESCRIPTION DES DESSINS

L'invention et ses différentes caractéristiques techniques seront mieux comprises à la lecture de la description détaillée suivante accompagnée des figures en présentant respectivement :
- figure 1, déjà décrite en coupe, un élément de pile à combustible selon l'art antérieur ;
- figure 2, en coupe, un élément de pile à combustible selon l'invention, et
- figure 3, en coupe, le dispositif d'étanchéité du module de pile à combustible selon l'invention.

### EXPOSÉ DÉTAILLÉ DE MODES DE RÉALISATION PARTICULIERS

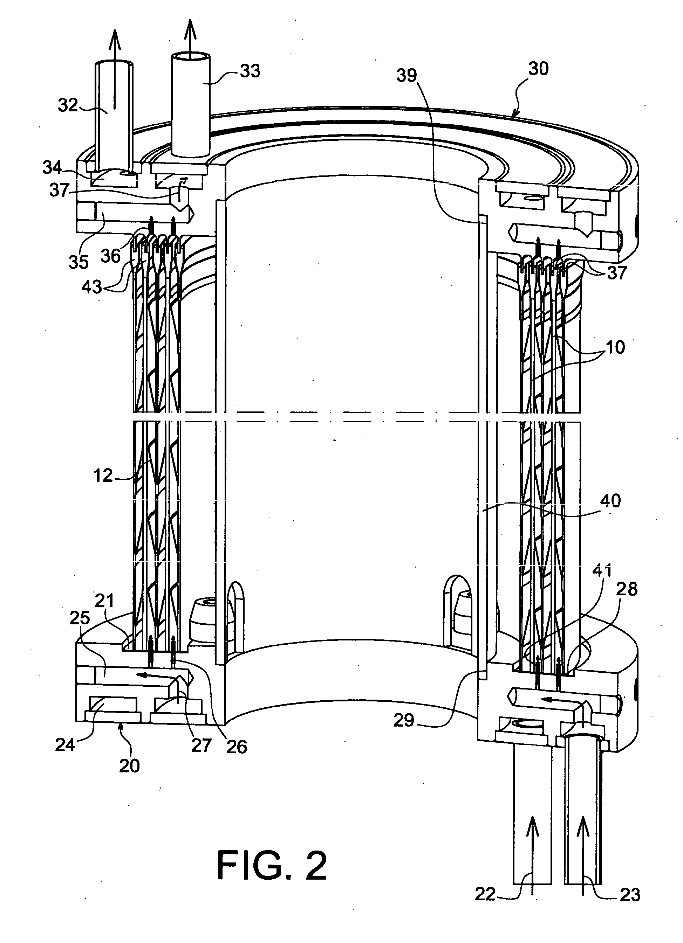

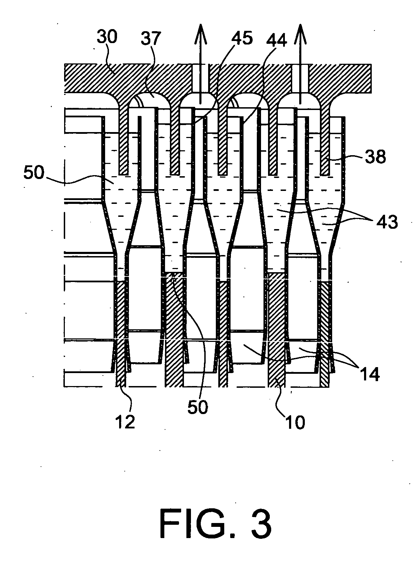

En référence à la figure 2, le module selon l'invention comprend principalement un boîtier de distribution 20 qui est ici le boîtier inférieur servant de base à un empilement concentrique de cellules 10 élémentaires et un boîtier de collectage 30 qui est ici le boîtier supérieur, coiffant l'empilement de cellules 10. L'ensemble est complété d'un tube de support et de centrage 40 placé au centre de l'empilement concentrique de cellules 10. Ce tube de support et de centrage 40 est placé dans un encastrement 29 du boîtier de distribution 20 et dans un encastrement 39 du boîtier de collectage 30. L'empilement de cellules 10 est placé dans une rainure 21 du boîtier de distribution 20, avec un joint en verre inférieur 27 en complément. Dans sa partie supérieure l'empilement de cellules 10 est placé dans des cavités 37 formées sur la surface inférieure du boîtier de collectage 30. Plus précisément, dans leur partie supérieure, chaque cellule 10 et chaque interconnecteur possèdent un évasement constituant un réservoir 43, chacun de ces derniers étant placé entre deux parois constituant les cavité 37. Le détail de cette installation sera décrite en référence à la figure 3.

Le boîtier de distribution 20 possède des conduits d'entrée 22 et 23 des gaz combustibles qui le traversent par l'intermédiaire de deux canalisations circulaires 24, de passages 27 débouchant dans au moins un canal radial 25. Des passages 26 permettent au gaz d'être distribué dans des chambres anodique et cathodique placées de part et d'autre de chacune des cellules 10.

Des tubes capillaires 41 sont placés dans le prolongement des interconnecteurs 12. Ils sont emmanchés dans des lamages, afin d'éviter l'obstruction de canaux d'alimentation par le joint inférieur 28, en verre. La face inférieure des cellules 11 et des interconnecteurs 12 et en contact avec le joint inférieur 28, en verre, placé dans la rainure 21 du boîtier de distribution 20.

De manière similaire, des passages 36 sont aménagés en face des sorties de ces chambres anodiques et cathodiques, dans le boîtier de collectage 30. Ainsi les gaz résiduels sont captés par au moins un canal radial 35 et sont envoyés vers des conduits de sortie 32 et 33 par l'intermédiaire de passages 37 et de canalisations circulaires 34.

Comme le montre la circulation des flèches, la circulation des gaz se fait globalement de façon verticale ascendante ou descendante. Sur la réalisation décrite à la figure 2 elle est faite de manière co-courante, mais peuvent être également envisagées à contre courant.

Concernant le dispositif d'étanchéité spécifique à ce module, sur la figure 3, on retrouve le boîtier de collectage 30, plus précisément sa partie inférieure, les cavités 37 formées par des parois 38 qui sont concentriques. On distingue également les réservoirs 43 constitués par une alternance de virole interne 44 et externe 45 dont les extrémités sont légèrement décalées pour constituer ces évasements. La virole interne 44 et la virole 45 de chaque réservoir 43 sont placées chacune dans deux cavités 37 adjacentes. En d'autre terme, les chambres anodiques et cathodiques 14 entourant chaque cellule 10 débouchent chacune dans une des cavités 37. Sur cette figure 3 on a également fait figurer les interconnecteurs 12 qui sont placés de manière concentrique et intercalés entre les cellules 10 également concentriques.

L'étanchéité de ce module a ce niveau est assuré par un joint supérieur 50, en verre, enfoncé dans l'ensemble constitué de l'empilement des cellules 10 et des interconnecteurs 12 au niveau des réservoirs 43. Ce joint supérieur 50 obstrue donc les extrémités des interconnecteurs 12 et des cellules 10 sur une épaisseur assez conséquente. De plus, on note que les parois 38, qui forment les cavités 37, sont également enfoncées dans le joint 50.

Les viroles internes 44 et externes 45 sont obtenues à partir d'un feuillard métallique, par exemple en alliage à base de nickel ou à base de fer, roulé et soudé. Plus précisément, les viroles internes 44 et externes 45 qui coiffent les interconnecteurs 12 sont réalisées à partir du même matériau que celui-ci et peuvent être, soient emboîtés soient soudés en bout de tube. Dans le cas ou elles sont emboîtées elles possèdent une forme supplémentaire qui fait office de butée axiale. Les viroles internes 44 et externes 45 qui coiffent les cellules 10 sont réalisées à partir d'un matériau possédant un coefficient de dilatation le plus proche possible de celui des cellules 11. Elles sont emboîtées et possèdent une forme qui fait office de butée axiale.

Concernant l'étanchéité en bout des cellules 10, les diamètres à froid des viroles internes 44 et externes 45 sont déterminées de façon à avoir, quelque soit la température, du jeu entre chaque cellule 11 et leur virole interne 44 et externe 45. Ce jeu doit être dimensionné afin de supprimer tout effort radial risquant d'entraîner la ruine de la cellule 10, tout en assurant le confinement du verre constituant le joint 50.

Pour limiter les problèmes de corrosion et de court-circuit, les viroles internes 44 et externes 45 peuvent être revêtues à l'aide d'un matériau résistant à la corrosion et étant un isolant électrique, par exemple zircone.

Le boîtier de collectage 30 est métallique ou en céramique. Il est constitué d'un matériau possédant le coefficient de dilatation le plus proche possible des cellules 10, de façon à limiter les efforts pendant les phases transitoires thermiques, pour les température en dessous de la température de transition vitreuse du verre constituant le joint 50.

Les cellules 10, de forme tubulaire, sont réalisées par un dépôt de plasma ou par tout autre procédé de fabrication de pièce en céramique. Puisqu'elles ont des rayons croissants, elles sont montées les unes dans les autres. On précise que leur axe en position de fonctionnement est vertical.

Les interconnecteurs 12 sont également tubulaires et métalliques. On rappelle qu'ils assurent la séparation des gaz et la mise en série des cellules 10 grâce à des lamelles rapportées sur ceux-ci par soudage ou brasage.

## Revendications

1. Module de pile à combustible composé :
- d'un empilement tubulaire de cellules (10) élémentaires, intercalées avec des interconnecteurs (12), le module comprenant pour chaque étage relatif à une cellule (10) :
* un interconnecteur (12) ;
* une chambre anodique (14) ;
* une cellule (10) élémentaire,
* une chambre cathodique,
- de deux boîtiers de distribution et de collectage (20, 30) placés aux deux extrémités de l'empilement, dont un boîtier (30) qui est supérieur et un boîtier (20) qui est inférieur, et
- d'un dispositif d'étanchéité constitué d'un joint supérieur (50), situé entre l'empilement et le boîtier supérieur (30),
**caractérisé en ce que** le dispositif d'étanchéité se complète d'une surface inférieure du boîtier (30) qui est supérieur, qui possède, pour chaque étage relatif à une cellule (10) deux parois tubulaires (38), concentriques qui sont plongées dans le joint supérieur (50), les chambres anodiques (14) et cathodique (14) étant terminées par des réservoirs (43) constitués chacun par une virole interne (44) et tubulaire et une virole externe (45) tubulaire, contenant le joint supérieur (50) et débouchant par couple dans l'intérieur d'une cavité (37) du boîtier (30 qui est supérieur.

2. Module selon la revendication 1, **caractérisé en ce que** le joint supérieur (50) est en verre.

3. Module selon la revendication 1 ou 2, **caractérisé en ce que** la structure du module est cylindrique.

4. Module selon la revendication 1, **caractérisé en ce que** le boîtier inférieur est un boîtier de distribution (20) complété d'un joint inférieur (27) placé entre l'empilement et le boîtier de distribution (20), et **en ce que** le boîtier supérieur et un boîtier de collectage (30) complété du joint supérieur (50).

5. Module selon la revendication 1, **caractérisé en ce que** le boîtier inférieur et supérieur constituent chacun un boîtier de distribution d'un premier gaz et un boîtier de collectage pour un deuxième gaz.

6. Module selon la revendication 4, **caractérisé en ce qu'**il comprend des moyens de distribution du boîtier de distribution (20) constitués d'au moins deux canaux annulaire (24) débouchant dans au moins deux canaux radiaux (25) débouchant eux-mêmes sur une surface de l'empilement par l'intermédiaire de passages de distribution (26) destiné à alimenter les électrodes des cellules (10) par l'intermédiaire des chambres anodiques et cathodiques (14).

7. Module selon la revendication 4, **caractérisé en ce qu'**il comprend des moyens de collectage du boîtier de collectage (30) constitués par au moins deux canaux radiaux (35) débouchant sur la surface en regard de l'empilement par des passages de collectage (36) et débouchant sur la surface externe du boîtier de collectage (30) par l'intermédiaire de canaux annulaires (34) et de passages de sortie (37) pour la sortie des gaz résiduels.

8. Module selon la revendication 1, **caractérisé en ce qu'**il comprend un tube de support et de centrage (40), placé au centre de l'empilement.

## Claims

1. Fuel cell module composed:
- of a tubular stack of elementary cells (10), intercalated with interconnectors (12), the module comprising for each stage elative to a cell (10):
* an interconnector (12);
* an anodic chamber (14);
* an elementary cell (10),
* a cathodic chamber,
- two distribution and collection boxes (20, 30) placed at the two ends of the stack, one box (30) of which is upper and one box (20) which is lower, and
- a sealing device formed of an upper seal (50), situated between the stack and the upper box (30),
**characterised in that** the sealing device is completed by a lower surface of the upper box (30), which has, for each stage relative to a cell (10), two tubular concentric walls (38) that are immersed in the upper seal (50), the anodic (14) and cathodic (14) chambers being terminated by tanks (43) each formed of an inner tubular ferrule (44) and an outer tubular ferrule (45), containing the upper seal (50) and opening by pairs inside a cavity (37) of the upper box (30).

2. Module according to claim 1, **characterised in that** the upper seal (50) is in glass.

3. Module according to claim 1 or 2, **characterised in that** the structure of the module is cylindrical.

4. Module according to claim 1, **characterised in that** the lower box is a distribution box (20) completed by a lower seal (27) placed between the stack and the distribution box (20), and **in that** the upper box and a collection box (30) are completed by the upper seal (50).

5. Module according to claim 1, **characterised in that** the lower and upper boxes each form a distribution box for a first gas and a collection box for a second gas.

6. Module according to claim 4, **characterised in that** it comprises distribution means of the distribution box (20) formed of at least two annular channels (24) opening into at least two radial channels (25) themselves opening onto one surface of the stack through distribution passages (26) intended to supply the electrodes of the cells (10) through anodic and cathodic chambers (14).

7. Module according to claim 4, **characterised in that** it comprises collection means of the collection box (30) formed of at least two radial channels (35) opening onto the surface opposite the stack by collection passages (36) and opening onto the outer surface of the collection box (30) through annular channels (34) and outlet passages (37) for the outlet of residual gases.

8. Module according to claim 1, **characterised in that** it comprises a support and centring tube (40), placed at the centre of the stack.

## Patentansprüche

1. Brennsfioffzellenmodul, gebildet durch:
- einen röhrenförmigen Stapel aus Elementarzellen (10) und eingefügten Zwischenverbindungselementen (12), wobei der Modul für jede Stufe bezüglich einer Zelle (10) umfasst:
* ein Zwischenverbindungselement (12);
* eine Anodenkammer (14);
* eine Elementarzelle (10),
* eine Kathodenkammer,
- jeweils ein Verteilgehäuse und ein Sammelgehäuse (20, 30), angeordnet an den beiden Enden des Stapels, nämlich ein oberes Gehäuse (30) und ein unteres Gehäuse (20), und
- eine Abdichteinrichtung, gebildet durch eine obere Dichtung (50), angeordnet zwischen dem Stapel und dem oberen Gehäuse (30),
**dadurch gekennzeichnet, dass** die Abdichteinrichtung vervollständigt wird durch eine untere Fläche des oberen Gehäuses (30), das für jede Stufe bezüglich einer Zelle (10) zwei röhrenförmige konzentrische Wände (38) umfasst, die in die obere Dichtung (50) hineinragen, wobei die Anodenkammer (14) und Kathodenkammer (14) mit Behältnissen (43) enden, jedes gebildet durch einen rohrförmigen Innenring (44) und einen rohrförmigen Außenring (45), die obere Dichtung (50) enthaltend und paarweise im Innern eines Hohlraums (37) des oberen Gehäuses (30) mündend.

2. Modul nach Anspruch 1, **dadurch gekennzeichnet, dass** die obere Dichtung (50) aus Glas ist.

3. Modul nach Anspruch 1 oder 2, **dadurch gekennzeichnet, dass** die Struktur des Moduls zylindrisch ist.

4. Modul nach Anspruch 1, **dadurch gekennzeichnet, dass** das untere Gehäuse ein Verteilgehäuse (20) ist, vervollständigt durch eine untere Dichtung (27), angeordnet zwischen dem Stapel und dem Verteilgehäuse (20), und **dadurch**, dass das obere Gehäuse (30) ein Sammelgehäuse ist, vervollständigt durch die obere Dichtung (50).

5. Modul nach Anspruch 1, **dadurch gekennzeichnet, dass** das untere und das obere Gehäuse jeweils ein Verteilgehäuse für ein erstes Gas und ein Sammelgehäuse für ein zweites Gas bilden.

6. Modul nach Anspruch 4, **dadurch gekennzeichnet, dass** er Verteileinrichtungen des Verteilgehäuses (20) umfasst, gebildet durch wenigstens zwei ringförmige Kanäle (24), die in wenigstens zwei radiale Kanäle (25) münden, ihrerseits in einer Fläche des Stapels mündend, durch Verteildurchgänge (26), dazu bestimmt, die Elektroden der Zellen (10) zu versorgen, mittels der Anoden- und Kathodenkammern (14).

7. Modul nach Anspruch 4, **dadurch gekennzeichnet, dass** er Sammeleinrichtungen des Sammelgehäuses (30) umfasst, gebildet durch wenigstens zwei radiale Kanäle (35), die in der dem Stapel gegenüberstehenden Fläche durch Sammeldurchgänge (36) münden und an der Außenfläche des Sammelgehäuses (30) durch ringförmige Kanäle (34) und Ausgangsdurchgänge (37) für den Austritt der Restgase münden.

8. Modul nach Anspruch 1, **dadurch gekennzeichnet, dass** er ein Trag- und Zentrierrohr (40) umfasst, angeordnet in der Mitte des Stapels.
